# EUROPÄISCHE PATENTSCHRIFT

(11) **EP 0 738 622 B1**
(45) Veröffentlichungstag und Bekanntmachung des Hinweises auf die Patenterteilung: **10.11.1999**
(21) Anmeldenummer: 96102936.0
(22) Anmeldetag: 28.02.1996
(51) Int. Cl.: B60K 26/04, G05G 1/14

(54) **Gaspedal mit Reibkörper**
Accelerator pedal with friction element
Pédale d'accélérateur avec élément de friction

(30) Priorität: 20.04.1995 DE 19514541
(43) Veröffentlichungstag der Anmeldung: 23.10.1996
(73) Patentinhaber: DaimlerChrysler AG, 70567 Stuttgart (DE)
(72) Erfinder: Papenhagen, Dieter, 71334 Waiblingen (DE); Meyer, Thorsten, 70736 Fellbach (DE)

(56) Entgegenhaltungen:
- WO-A-93/12949
- WO-A-94/29584
- DE-A- 4 300 096

## Beschreibung

Die Erfindung betrifft eine Vorrichtung zur Betätigung eines Regelgliedes einer Brennkraftmaschine in einem Kraftfahrzeug gemäß den weiteren im Oberbegriff des Patentanspruchs 1 angegebenen Merkmalen.

Eine gattungsgemäße Vorrichtung ist aus der DE 43 00 096 A1 bekannt.

In der genannten Druckschrift ist zur Erzeugung eines Sollwert-Signals für die elektromotorische Steuerung der Leistung einer Brennkraftmaschine in einem Kraftfahrzeug eine Vorrichtung vorgeschlagen, welche dadurch gekennzeichnet ist, daß das Fahrpedal eine Reibfläche aufweist und das Widerlager für die Rückstellfeder an der Montagebasis als schwenkbare Wippe ausgebildet ist, wobei das eine Ende der Wippe zur Abstützung der Rückstellfeder dient und das andere Ende der Wippe gegen die Reibfläche des Fahrpedals angepreßt wird.

Nachteilig an der bekannten Vorrichtung ist jedoch, daß diese einen verhältnismäßig komplexen Aufbau aufweist und insbesondere die Montage der Rückstellfeder relativ aufwendig ist.

Die WO-A-94 29584 beschreibt eine weitere Vorrichtung zur Betätigung eines Regelgliedes. Um eine elektrische bzw. elektronische Verbindung zwischen dem Pedal und der Brennkraftmaschine erreichen zu können, sind dabei relativ einfache mechanische Bauteile, wie Federn, Bolzen oder Buchsen mit einem Lagesensor verbunden, wobei zwischen den Bauteilen wirkende Reibungskräfte ausgenutzt werden.

Aus der DE 34 43 897 C2 ist eine Vorrichtung bekannt, wobei von einer konischen Wickelfeder ein mit dem Pedalhebel fest verbundener Reibkörper gegen eine besonders angebrachte Reibfläche am Lagerbolzen des Pedalhebels gedrückt wird. Bei einer Vor- oder Rückwärtsbewegung des Pedalhebels entsteht hierdurch ein Reibmoment vorbestimmter Größe, welches die Kraft-Weg-Hysterese im gesamten Betätigungsgestänge festlegt. Bei dieser Vorrichtung ist die Kraft-Weg-Hysterese in Bezug auf die reibungsfreie Bewegung in beiden Bewegungsrichtungen des Pedalhebels gleich.

Der Erfindung liegt die Aufgabe zugrunde, die bekannten Vorrichtungen derart zu verbessern, daß für beide Bewegungsrichtungen des Pedalhebels unterschiedliche Hysteresewerte bei weiter vereinfachtem Aufbau erzielt werden.

Diese Aufgabe ist erfindungsgemäß durch die im Kennzeichen des Patentanspruchs 1 angegebenen Merkmale gelöst.

Durch die erfindungsgemäße Ausbildung des Reibkörpers als den Lagerbolzen zumindest teilweise umschlingender Draht- oder Seilzug ist eine einfache und leicht zu montierende Vorrichtung zur Betätigung eines Regelgliedes in einem Kraftfahrzeug mit vereinfachtem Aufbau realisiert, welche für beide Bewegungsrichtungen des Pedalhebels unterschiedliche Hysteresewerte erzielt.

Die Reibfläche, gegen welche der Reibkörper, d.h. der Seilzug, bei Betätigung des Pedalhebels gedrückt wird, kann in einfacher Weise am Lagerbolzen vorgesehen sein.

Die Erfindung wird im folgenden anhand verschiedener in der Zeichnung dargestellter Ausführungsbeispiele näher erläutert.

Dabei zeigt:
- Fig. 1: den im Fußraum eines Fahrzeuges angeordneten Teil einer Vorrichtung zum Betätigen eines Regelgliedes einer Brennkraftmaschine mit einem den Lagerbolzen des Pedalhebels umschlingenden Seilzug als Reibkörper (in Querrichtung des Fahrzeuges gesehen);
- Fig. 2: in einer perspektivischen Ansicht aus Fig. 1 den Lagerbolzen mit Pedalhebel als Einzelheit sowie mit einer Schwinge zur Verbindung von Seilzug und Rückstellfeder;
- Fig. 3: einen Pedalhebel mit einem Reibkörper ähnlich dem der Fig. 1, der von der Rückstellfeder gegen eine Reibfläche am Lagerbolzen andrückbar ist; und
- Fig. 4: ein Diagramm mit dem Hystereseverlauf.

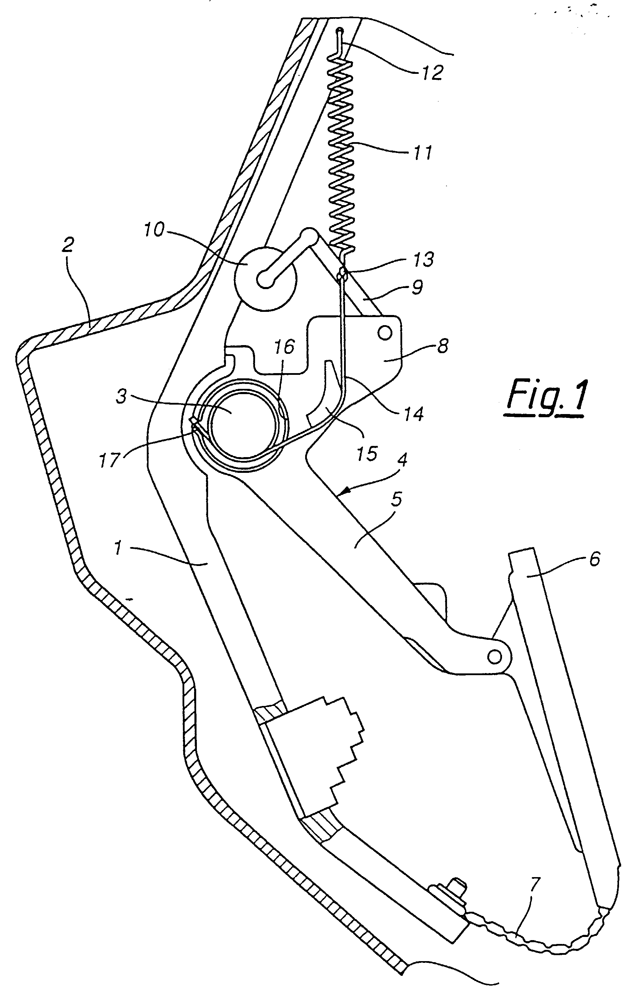

Gemäß Fig. 1 ist in einer Grundplatte 1, die fest mit einer Spritzwand 2 des Kraftfahrzeuges verbunden ist, ein Lagerbolzen 3 festgehalten, auf dem ein als Winkelhebel ausgebildeter Pedalhebel 4 schwenkbar gelagert ist. An einem Hebelarm 5 des Pedalhebels 4 ist ein Pedal 6 angelenkt und über eine Gliederkoppel 7 an der Grundplatte 1 befestigt, während am anderen Hebelarm 8 ein Gestänge 9 zur Betätigung eines ebenfalls an der Grundplatte 1 befestigten Pedalweggebers 10 in bekannter Weise zur Bildung elektronischer Kennwerte für die elektrische Ansteuerung eines Regelgliedes, beispielsweise einer Drosselklappe der Brennkraftmaschine, angeschlossen ist.

Bei einer eventuellen mechanischen Betätigung der Drosselklappe ist mit dem Hebelarm 8 ein entsprechendes mechanisches Gestänge verbunden.

Die Bewegung des Pedalhebels 4 von der festgelegten Leerlaufstellung in Richtung Vollast erfolgt entgegen der Wirkung einer Rückstellfeder 11, die gemäß Fig. 1 mit einem Ende 12 an der Grundplatte 1 und mit dem anderen Ende 13 mit einem Seilzug 14 verbunden ist und sich dabei zwischen Grundplatte 1 und Hebelarm 8 etwa rechtwinklig zu diesem erstreckt. Ausgehend von der Rückstellfeder 11 wird der Seilzug 14 an einer Gleitschiene 15 am Hebelarm 8 um einen Winkel von annähernd 90° in Richtung des Lagerbolzens 3 umgelenkt. Der Seilzug 14 umschlingt den Lagerbolzen 3 auf einem seitlich vom Pedalhebel 4 liegenden Bolzenabschnitt, dessen Oberfläche eine Reibfläche 16 für den Seilzug - als Reibkörper - bildet, der anschließend mit seinem freien Ende in einer Lasche 17 am Pedalhebel 4 fixiert ist.

Dabei erfolgt die Umschlingung so, daß bei einer Bewegung des Pedalhebels 4 in Vollastrichtung der Seilzug 14 von der Lasche 17 gegen die Reibfläche 16 angedrückt wird. Dies bedeutet, daß bei einer Betätigung des Pedalhebels 4 in Vollastrichtung bzw. in Richtung Vollgas eine stärkere Kraft aufgebracht werden muß und damit der Fahrer ein besseres Fahrgefühl bekommt, und daß bei einer Entlastung bzw. bei einer Rücknahme des Pedalhebels eine Rückstellkraft durch die Rückstellfeder 11 erzeugt wird.

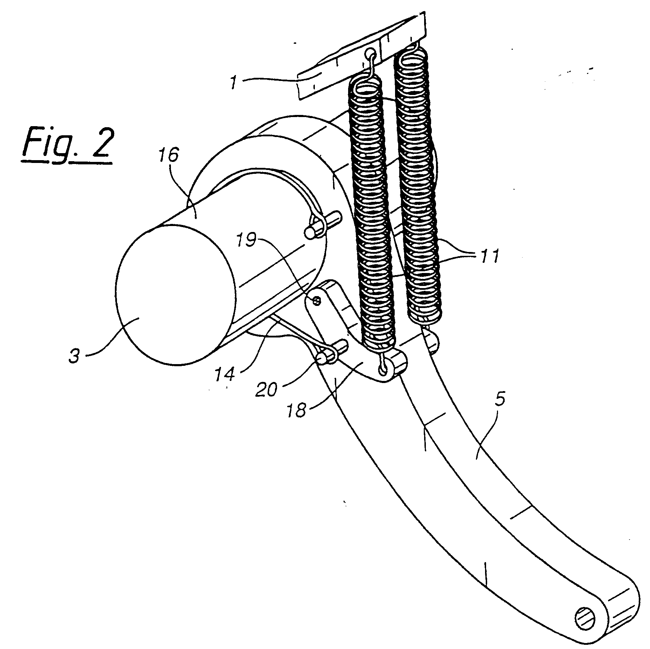

Fig. 2 zeigt in einer perspektivischen Ansicht die Ausgestaltung aus der Fig. 1. Dabei ist ersichtlich, daß zwei Rückstellfedern 11 vorgesehen sein können, und daß die Befestigung und die Verbindung des Seilzuges 14 mit der Rückstellfeder 11 über eine Schwinge 18 erfolgt. Die Schwinge 18 ist auf der von dem Einhängeende der Rückstellfeder 11 abgewandten Seite in einem Lager 19 schwenkbar gelagert. Der Seilzug 14 ist zwischen den beiden Enden der Schwinge 18 an einem vorstehenden Stift 20 eingehängt.

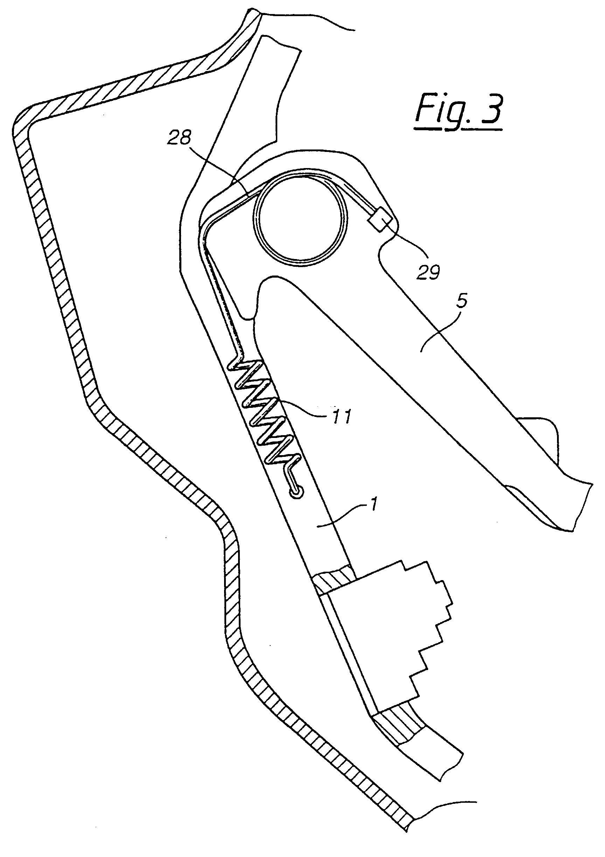

Die Fig. 3 zeigt eine Ausgestaltung eines Pedalhebels 4 mit einem als Stahldrahtschlinge 28 ausgebildeten Drahtzug, die mit der Rückstellfeder 11 verbunden ist. Das andere Ende der Stahldrahtschlinge 28 ist über einen Seilnippel 29 mit dem Hebelarm 5 des Pedalhebels 4 (siehe Fig. 1) verbunden. Wie ersichtlich ist die Rückstellfeder 11 in diesem Falle an der Grundplatte 1 in eine Öse eingehängt.

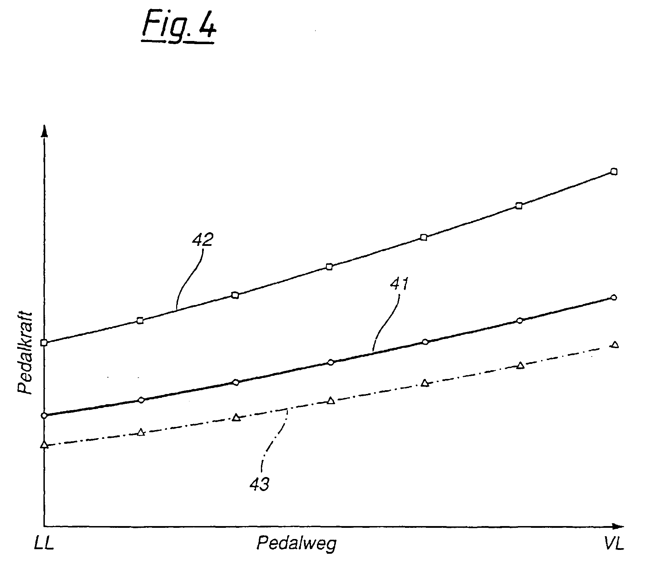

Im Diagramm der Fig. 4 ist der mit der dargestellten Vorrichtung erzielbare Hystereseverlauf dargestellt.

Die Kennlinie 41 zeigt dabei den Verlauf der Pedalkraft in Abhängigkeit des Pedalweges zwischen den Endstellungen Leerlauf LL und Vollast VL ohne Reibung.

Mit der beschriebenen Vorrichtung ergibt sich ein Verlauf der Pedalkraft gemäß der Linie 42, wobei deren Abstand zur Kennlinie 41 den oberen Hystereseast bildet.

Beim Rücklauf, d.h. bei einer Bewegung des Pedalhebels 5 aus Richtung VL nach LL, stellt sich ein Verlauf der Pedalkraft gemäß der Linie 43 ein, wobei der Abstand zwischen der Kennlinie 41 und Linie 43 den unteren Hystereseast bildet.

Insgesamt ist aus dem Diagramm zu erkennen, daß die Gesamthysterese (Abstand zwischen den Linien 42 und 43) mit Zunahme des Pedalweges ebenfalls zunimmt.

## Patentansprüche

1. Vorrichtung zur Betätigung eines Regelgliedes einer Brennkraftmaschine in einem Kraftfahrzeug mittels eines Fahrpedals (6) und eines Pedalhebels (4), der schwenkbar auf einem Lagerbolzen (3) gelagert ist, welcher in einem Fahrzeugteil (1) gehalten ist, wobei der Pedalhebel (4) mit einem Reibelement zusammenwirkt, das bei einer Bewegung des Pedalhebels (4) ein Reibmoment erzeugt und ein festes Stützteil mit einer Reibfläche (16) sowie einen unter der Wirkung eines Federelements (11) gegen die Reibfläche (16) drückbaren Reibkörper (14) aufweist, und wobei der Reibkörper (14) mit der die Rückstellbewegung des Pedalhebels (4) unterstützenden Rückstellfeder (11) als Federelement gekoppelt ist,
**dadurch gekennzeichnet**, daß
der Reibkörper ein den Lagerbolzen (3) zumindest teilweise umschlingender Draht- oder Seilzug (14) ist, der mit einem Ende am Pedalhebel (4) und mit dem anderen Ende über die Rückstellfeder (11) am Fahrzeugteil (1) angelenkt ist.

2. Vorrichtung nach Anspruch 1,
**dadurch gekennzeichnet**, daß
die Reibfläche (16) am Lagerbolzen (3) vorgesehen ist.

## Claims

1. A device for operating a control element of an internal combustion engine in a motor vehicle having an accelerator pedal (6) and a pedal lever (4), which is pivotally mounted on a bearing bolt (3) retained in a vehicle component (1), the pedal lever (4) co-operating with a friction member which produces a friction torque when the pedal lever (4) is displaced and having a fixed supporting element with a friction surface (16) and a friction member (14) that can be pressed against the friction surface (16) under the action of a spring element (11) and wherein the friction member (14) is coupled with the return spring (11) as a resilient element supporting the return movement of the pedal lever (4),
**characterised in that**
the friction member is a control wire or cable (14) at least partially looped around the bearing bolt (3), which is coupled with the pedal lever (4) at one end and with the vehicle component (1) by means of the return spring (11) at the other end.

2. A device as claimed in claim 1,
**characterised in that**
the friction surface (16) is provided on the bearing bolt (3).

## Revendications

1. Dispositif d'actionnement d'un organe de régulation d'un moteur à combustion interne dans un véhicule automobile, au moyen d'une pédale d'accélérateur (6) et d'un levier à pédale, monté pivotant sur un boulon de tourillonnement (3), qui est fixé dans une partie de véhicule (1), le levier de pédale (4) coopérant avec un élément à friction qui, en cas de déplacement du levier à pédale (4), génère un couple de friction et présente une partie d'appui fixe avec une surface de friction (16), ainsi qu'un corps de friction (14) pouvant être pressé, sous l'effet d'un élément formant ressort (11), contre la face de friction (16), et où le corps de friction (14) est couplé au ressort de rappel (11), faisant office d'élément élastique, assistant le déplacement de rappel du levier de pédale (4), caractérisé en ce que le corps de friction est un câble en fil métallique ou un câble de traction (14) enlaçant au moins partiellement le boulon de tourillonnement (3) et articulé, à une extrémité, sur le levier de pédale (4) et, à l'autre extrémité, sur la partie de véhicule (1), par l'intermédiaire du ressort de rappel (11).

2. Dispositif selon la revendication 1, caractérisé en ce que la surface de friction (16) est prévue sur le boulon de tourillonnement (3).
